# EUROPÄISCHE PATENTSCHRIFT

(11) **EP 1 484 593 B1**
(45) Veröffentlichungstag und Bekanntmachung des Hinweises auf die Patenterteilung: **05.10.2011**
(21) Anmeldenummer: 04013096.5
(22) Anmeldetag: 03.06.2004
(51) Int. Cl.: G01M 17/007, G01L 5/28

(54) **Fahrzeugprüfstand**
Vehicle testing station
Banc d'éssai de véhicules

(30) Priorität: 03.06.2003 DE 10325276
(43) Veröffentlichungstag der Anmeldung: 08.12.2004
(73) Patentinhaber: HORIBA Europe GmbH, 64293 Darmstadt (DE)
(72) Erfinder: Oehme, Uwe, 64380 Rossdorf (DE)
(74) Vertreter: Behrens, Helmut

(56) Entgegenhaltungen:
- EP-A1- 0 417 020
- EP-B- 0 824 672
- DE-A- 19 900 620
- FR-A- 1 543 183
- US-A- 2 144 010

## Beschreibung

Die Erfindung betrifft einen Fahrzeugprüfstand gemäß dem Oberbegriff des Patentanspruchs 1.

Prüfstände werden seit vielen Jahren in der Automobilindustrie eingesetzt, um Fahrzeuge stationär statt in Fahrversuchen zu testen. Derartige Fahrzeugprüfstände werden für verschiedene Prüfverfahren eingesetzt. Die Hauptanwendung derartiger Prüfstände ist die Messung von Drehmoment und Leistung eines Fahrzeugs, sowie die Simulation der Fahrmechanik und der Trägheitskräfte, die sich bei tatsächlichem Bewegen des Fahrzeugs auf der Straße ergeben.

In jüngster Zeit wurden die nationalen und internationalen Abgasvorschriften immer strikter, so daß auch höhere Anforderungen an die Meßverfahren zur Ermittlung des Abgasverhaltens von Kraftfahrzeugen zu stellen sind. Deshalb werden auf speziellen Leistungsprüfständen das Abgasverhalten gemessen, das auf vorgegebenen Fahrstrecken eingehalten werden muß. Hierzu haben sich in der Praxis Rollenprüfstände bewährt, durch die Kräfte simuliert werden, die auf die Antriebsräder eines Fahrzeugs wirken. Während der Simulation muß das Fahrzeug auf den Rollen des Abgasprüfstandes laufen, wobei die Geschwindigkeit, das Drehmoment, die Beschleunigung und die zurückgelegte Strecke so sein muß, als würde das Fahrzeug in gleicher Art und Weise auf der Straße gefahren.

Da die geforderten gesetzlichen Abgasnormen von den Fahrzeugherstellern eingehalten werden müssen, sind auch hohe Anforderungen an die Fahrzeugprüfstände bezüglich Genauigkeit der Simulation gestellt. Dazu gelten in den meisten Ländern auch gesetzliche Prüfnormen für derartige Abgasprüfstände, die die Einhaltung der geforderten Abgasnormen sicherstellen sollen. Bei derartigen Abgasprüfständen besteht die Schwierigkeit, daß sie nicht nur die Prüfnorm bei einem Fahrzeugtyp einzuhalten haben, sondern für unterschiedliche Fahrzeugarten, mit unterschiedlichen Antriebssystemen, Gewichten und Spurweiten konzipiert sein müssen. So soll ein leistungsfähiger Abgasprüfstand für Fahrzeuge mit Fahrzeuggewichten bis 2.500 kg, Fahrzeugbreiten bis 2 m und Spurweiten ab ca. 110 cm geeignet sein. Dazu sind meist auch zu simulierende Beschleunigungs- und Verzögerungsleistungen bis zu 110 kW notwendig, die durch entsprechende elektrische Maschinen aufgebracht werden müssen. Dabei sollen die Prüfstände nicht nur für Fahrzeuge mit Vorderrad- oder Heckantrieb ausgelegt sein, sondern möglichst auch für Fahrzeuge mit Allradantrieb. Für die Einhaltung der geforderten Prüfnormen für eine Vielzahl von Fahrzeugtypen und - größen haben sich vorzugsweise Abgasprüfstände mit Rollendurchmessern von 48" bewährt, da durch diese auch große Fahrzeugmassen simuliert werden können und die großen Laufrollen den meist ebenen Straßenbelägen sehr nahe kommen.

Ein derartiger Leistungs- bzw. Abgasprüfstand ist aus der DE 199 00 620 A1 bekannt, dessen Rollendurchmesser mit etwa dem zweifachen Durchmesser von Fahrzeugrädern angegeben ist. Der dort offenbarte Prüfstand verfügt über zwei Laufrollensätze von jeweils zwei Rollen, auf denen die Fahrzeugräder zur Abgasprüfung angeordnet werden. Die beiden ca. 48" großen Rollen sind auf einer durchgehenden Achse angeordnet, in deren Mitte eine elektrische Maschine als sogenannter Mittelmotor zum Aufbringen der notwendigen Beschleunigung oder Belastung vorgesehen ist. Bei dieser elektrischen Maschine handelt es sich vorzugsweise um einen Wechselstrommotor, der in einem Rahmen ortsfest befestigt ist. Diese Wechselstrommaschine ist im ortsfesten Rahmen pendelnd gelagert und stützt sich auf eine Kraftmeßvorrichtung ab, mit der das Belastungs- oder Beschleunigungsmoment ermittelt wird. Die gemeinsame Welle, die die beiden Rollen direkt antreibt oder belastet, ist im Tragrahmen über eine besondere schmierölfreie Lagerung abgestützt, die besonders reibungsarm ist, um eine hohe Meßgenauigkeit und damit Simulationsgüte zu gewährleisten. Zur Fahrsimulation ist noch eine Steuereinheit vorgesehen, mit der die zur Simulation vorgegebenen Fahrzustände gesteuert werden.

Zur Abgasprüfung von Allradfahrzeugen sind beide Prüfsätze zueinander längs verstellbar, um Fahrzeuge mit verschiedenen Achsabständen prüfen zu können. Der offenbarte Fahrzeugprüfstand besitzt eine Antriebswelle mit einem verhältnismäßig großen Durchmesser und einen groß dimensionierten Motor zwischen den Prüfrollen, so daß damit offensichtlich auch große und schwere Fahrzeuge geprüft werden können. Durch die breiten Laufrollen dürften darüber hinaus auch Fahrzeuge mit verschiedenen Spurweiten und Fahrzeugbreiten prüfbar sein. Allerdings erfordert ein derartiger Prüfstand eine verhältnismäßig tiefe Grube, in der die groß dimensionierten Rollen und die hohe Wechselstrommaschine nebst Stützrahmen untergebracht werden kann. Dies verlangt nicht nur einen erheblichen Bauaufwand und hohe Kosten, sondern gestattet auch nur einen stationären Prüfbetrieb, bei dem die Fahrzeuge in jedem Fall zum Abgasprüfstand transportiert werden müssen. Da nach einer neueren EG-Abgasrichtline (70/220 EG) Abgasüberprüfungen demnächst auch am alten Fahrzeugbestand durchzuführen sind, müssen in Zukunft auch Altfahrzeuge von ihren Standorten an den Prüfstand befördert oder zusätzliche Prüfstände installiert werden. Deshalb dürfte es in Zukunft vorteilhaft sein, hochgenaue Abgasprüfstände einzusetzen, die auf normalen Verkehrswegen zu den Altfahrzeugen transportierbar sind.

Aus der EP 0 824 672 B1 ist ein transportabler Fahrzeugprüfstand bekannt, der zur Abgasprüfung vorgesehen ist. Hierbei handelt es sich um einen sogenannten Doppelrollenprüfstand, der ohne Baugrube auskommt und lediglich auf einem ebenen Boden befestigt wird. Dabei sind vor jedem Rollensatz Auffahrrampen vorgesehen, über die die zu prüfenden Fahrzeugräder auf jeden Rollensatz auffahren können. Dieser Fahrzeugprüfstand besteht dabei aus zwei separaten Doppelrolleneinheiten je Antriebsachse, die an einer gemeinsamen Schiene in ihrer Breite zueinander verstellbar angeordnet sind. Jede Rolleneinheit ist quer zum Fahrzeugrad angeordnet, wobei die Rollen in ihrem Durchmesser erheblich kleiner als ein übliches Fahrzeugrad ausgebildet sind. Seitlich neben jedem Doppelrollensatz ist eine separate Wechselstrommaschine zur gesteuerten Belastungseinleitung vorgesehen, die pendelnd gelagert ist und sich auf einen Kraftaufnehmer abstützt. Zur Trägheitsmassensimulation ist noch eine zusätzliche Schwungscheibe vorgesehen, die auf der gemeinsamen Motorwelle angebracht ist. Jeder Doppelrollensatz ist über einen Riemenantrieb mit der Wechselstrommaschine verbunden. Auch wenn dieser zerlegbare Fahrzeugprüfstand gut transportierbar und für nahezu alle Fahrzeugbreiten und Fahrzeugtypen geeignet ist, sind in jeder Rolleneinheit mindestens sechs Wellenlager vorgesehen, die alle reibungsbehaftet sind. Da deren Reibung nicht nur vom zu prüfenden Fahrzeuggewicht, sondern auch von unterschiedlichen Umgebungstemperaturen und Luftdruckverhältnissen abhängen, können diese zu nicht tarierbaren Meßfehlern des Belastungsmoments führen und damit falsche Abgaswerte hervorrufen.

Der Erfindung liegt deshalb die Aufgabe zugrunde, einen hochgenauen Fahrzeugprüfstand zu schaffen, der so kompakt ausgebildet ist, daß er auf üblichen Verkehrswegen transportierbar ist und Abgasmessungen an nahezu allen gängigen Fahrzeugtypen ermöglicht.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß durch den Mittelmotor und den vorgesehenen Doppelrollensatz eine hohe Meßgenauigkeit erzielbar ist und dies in einer mobilen Ausführung geschaffen wurde, die selbst Abgasprüfungen an kleinen Fahrzeugen mit Spurweiten ab ca. 1.100 mm sowie Fahrzeuggrößen bis 200 cm Breite und 2.500 kg Gewicht, und dies bei einer Prüfstandshöhe von unter 65 cm ermöglicht.

Ein derartiger erfindungsgemäßer Prüfstand hat auch den Vorteil, daß er ohne nennenswerte Demontage auf öffentlichen Straßen in einem Container oder auf einem Lkw verfahrbar ist, und am Prüfort in kürzester Zeit und ohne nennenswerten Montageaufwand Abgasprüfungen ermöglicht. Trotz kompaktester Bauweise gestattet der erfindungsgemäße Doppelrollenprüfstand vorteilhafterweise auch die Abgasprüfung von schweren Fahrzeugtypen, ohne daß zusätzliche Schwungmassen notwendig wären und dies bei optimaler Simulation der Fahrwegbeschaffenheit.

Durch die Mittelmotoranordnung benötigt jede Doppelrolleneinheit vorteilhafterweise nur vier Drehlagerstellen, so daß der Prüfstand sehr reibungsarm und verschleißarm ausgebildet ist.

Bei einer besonderen Ausführung der Erfindung ist als Mittelmotor ein geregelter Asynchronmotor vorgesehen. Dies hat den Vorteil, daß hierdurch sowohl Fahrzeuge mit kleinsten Spurweiten und großen Gewichtswerten prüfbar sind.

Bei einer weiteren besonderen Ausführungsart sind zwei längs verstellbare Doppelrolleneinheiten vorgesehen, mit der vorteilhafterweise auch Allradfahrzeuge mit unterschiedlichen Radständen prüfbar sind. Gleichzeitig kann dadurch auf einfache Weise eine nahezu selbsttätige Kalibrierung durchgeführt werden, die nahezu ohne manuelle zeitraubende Arbeitsvorgänge auskommt.

Eine weitere besondere Ausbildung, bei der auf der motorlosen Rollenwelle eine zusätzliche Bremseinrichtung vorgesehen ist, hat den Vorteil, daß dadurch keine Spurbreitenweite eingebüßt wird und dies, ohne daß zusätzliche reibungsbehaftete Lageroder Übertragungsstellen vorgesehen werden müssen. Bei einer weiteren besonderen Ausgestaltung werden die Laufrollen durch eine Flanschverbindung mit den Antriebswellen verbunden, wodurch vorteilhafterweise eine gute Zugänglichkeit und Wartungsfreundlichkeit erreicht wird. Dadurch ist auch der Einsatz kurzer Antriebwellen möglich, auf die vorteilhafterweise im Rollenhohlraum Drehzahlaufnehmer aufsetzbar sind, durch die die Prüfstandsbreite vorteilhafterweise nicht vergrößert werden muß.

Die Erfindung wird anhand eines Ausführungsbeispiels, das in der Zeichnung dargestellt ist, näher erläutert. Es zeigen.
- Fig. 1:: die wesentlichen Bauelemente eines Abgasprüfstandes mit einer Doppelrolleneinheit, und
- Fig. 2:: einen Prüfstand für Allradfahrzeuge mit zwei Doppelrolleneinheiten.

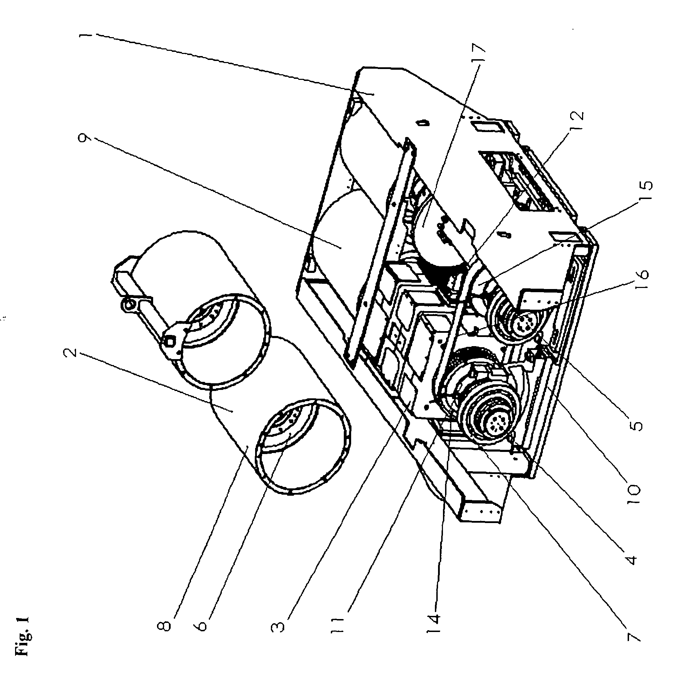

In Fig. 1 der Zeichnung ist eine Doppelrolleneinheit 1 eines Fahrzeugprüfstands dargestellt, die aus zwei Doppelrollensätzen 2 mit einer dazwischen angeordneten elektrischen Belastungsmaschine 3 besteht, dessen Drehzahl und Belastungsmoment ermittelt wird und die zur Abgasprüfung eines Kraftfahrzeugs mit einem Verbrennungsmotor vorgesehen ist.

Die dargestellte Doppelrolleneinheit 1 stellt im Grunde einen Doppelrollenprüfstand für Fahrzeuge mit einer Antriebsachse dar, der mit entsprechender Steuereinheit als Abgasprüfstand ausgebildet ist. Bei Abgasprüfständen treibt die Antriebsachse eines Kraftfahrzeugs mit Verbrennungsmotor die beiden Doppelrollensätze 2 an, die nach einem vorgegebenen Fahrzyklus durch die elektrische Maschine 3 belastet werden. Für einen derartig vorgegebenen Fahrzyklus wird gleichzeitig das Abgas der Verbrennungsmaschine erfaßt und nach seinen Schadstoffanteilen ausgewertet und angezeigt.

Zum Antrieb der Doppelrolleneinheit 1 werden die Antriebsräder zwischen die beiden Rollensätze 2 positioniert und durch dessen Verbrennungsmotor angetrieben. Jeder Rollensatz 2 besteht aus den beiden parallel zueinander angeordneten Laufrollen einer Fahrzeugseite, die synchron angetrieben und synchron belastet werden. Die beiden Doppelrollensätze 2 können auf ihrem Umfang mit einem fahrbahnähnlichen Belag beschichtet werden, so daß die Antriebskraft kraftschlüssig von den Fahrzeugreifen auf die Doppelrollensätze übertragen wird. Jede Laufrolle 8, 9 der Doppelrollensätze 2 besitzen einen Außendurchmesser von vorzugsweise 20", der eine geläufige Laufrollengröße darstellt, die gute Reibschlußwerte bei geringen Walkverhalten aufweist.

Aus dem ausgebaut dargestellten Doppelrollensatz 2 der Doppelrolleneinheit 1 ist ersichtlich, daß die Laufrollen 8 rohrförmig ausgebildet sind und in ihrem ersten Drittel in Richtung der Prüfstandsmitte jeweils einen innenliegenden Befestigungsring 6 aufweisen, mit dem diese an einem festen Aufnahmeflansch 7 mit den beiden Antriebswellen 4, 5 verschraubt werden. Die Laufrollen 8, 9 besitzen vorzugsweise eine Länge von 600 mm und sind quer zu einer Prüfstandslängsachse und bis zur äußeren Begrenzung des Fahrzeugprüfstands angeordnet. Die beiden vorderen Laufrollen 8, 9 der beiden Doppelrollensätze 2 sind über eine durchgehende Antriebswelle 4 mit einer etwa in der Mitte der Doppelrolleneinheit 1 angeordneten elektrischen Maschine 3 verbunden, die einen sogenannten Mittelmotor darstellt und sowohl generatorisch als auch motorisch betreibbar ist. Dieser Mittelmotor 3 ist vorzugsweise als drehzahlgeregelter Asynchronmotor ausgebildet und kann im Prinzip aber auch durch eine Gleichstrom- oder Synchronmaschine ersetzt werden.

Dieser vorgesehene Asynchronmotor 3 ist mit modernen IGBT-Umrichtern (Insulated Gate Bipolar Transistor) verbunden, wodurch eine präzise Drehzahlsteuerung gewährleistet ist. Der Asynchronmotor 3 ist in sehr kurzer Kompaktbauweise ausgestaltet und besitzt vorzugsweise ein rechteckiges Statorgehäuse von ca. 700 mm Länge und ca. 500 mm Höhe. Für eine Doppelrolleneinheit 1 sind Mittelmotoren 3 mit Nennleistung bis ca. 80 kW und einem kurzzeitigen Überlastbereich von ca. 110 kW vorgesehen, die auch vorgegebene Fahrsimulationen von hochmotorisierten Serienfahrzeugen gestattet. Dieser Asynchronmotor 3 besitzt eine durchgehende Antriebswelle 4, die als Läufer ausgebildet ist und die so weit über das Motorgehäuse hinausragt, daß daran die beiden vorderen Laufrollen 8, 9 befestigt werden können. Diese Motorantriebswelle 4 besitzt vorzugsweise eine Länge von 1.400 mm und einen Durchmesser von ca. 100 mm und ist für Fahrzeuggewichte bis ca. 2.500 kg bemessen.

Diese Motorantriebwelle 4 ist über zwei reibungsarme Wälzlager 11 als Drehlager drehbar mit einem ortsfesten Prüfstandsrahmen 10 verbunden, wobei der Motor 3 pendelnd an zwei vertikalen Stützen des Prüfstandsrahmens 10 aufgehängt ist. Weiterhin besitzt der pendelnd gelagerte Motor 3 in der Mitte seiner vorderen senkrechten Statorwand einen horizontal auskragenden Drehmomenthebel 12, der sich auf einen Kraftaufnehmer als Kraftmeßvorrichtung gegenüber dem Prüfstandsrahmen 10 abstützt und mit dem im Prüfbetrieb ein Signal erzeugt wird, das dem Belastungs- bzw. Antriebsmoment der Wechselstrommaschine 3 proportional ist.

Weiterhin ist zwischen dem linken Wälzlager 11 und dem gegenüberliegenden Motorgehäuse noch eine Riemenscheibe 14 befestigt, die als Zahnriemenantrieb der übrigen beiden Laufrollen dient. Parallel zu der Motorantriebswelle 4 ist eine zweite Antriebswelle 5 angeordnet, die der Länge der Motorantriebswelle 4 entspricht und vorzugsweise die gleichen Abmessungen besitzt. Diese durchgehende zweite Antriebswelle 5 ist auch entsprechend der Motorantriebswelle 4 gelagert und ebenfalls an ihren äußeren Enden mit zwei Aufnahmeflanschen 7 versehen, an denen die beiden hinteren Laufrollen angeschraubt sind. Gegenüber der Motorzahnriemenscheibe 14 ist in Prüfstandslängsrichtung eine gleichartige Zahnriemenscheibe 15 an der zweiten Antriebswelle 5 befestigt, die beide mit einem umlaufenden Zahnriemen 16 als Riemenantrieb verbunden sind, der die zweite Antriebswelle 5 mit synchroner Drehzahl antreibt bzw. belastet. Auf dieser zweiten Antriebswelle 5 ist im Zwischenraum vor dem Motorgehäuse eine Prüfstandsbremse 17 angebracht, die vorzugsweise als Scheibenbremse ausgebildet ist und nach dem Prüfvorgang den Prüfstand kurzzeitig stillsetzen kann. Auf der zweiten Antriebswelle 5 ist zusätzlich noch ein nicht dargestellter Drehzahlaufnehmer angebracht, mit dessen Hilfe die Drehzahl der zweiten Antriebswelle überwacht wird.

Die gesamte Doppelrolleneinheit 1 ist in einem flachen rechteckigen Prüfstandsrahmen 10 angeordnet und bildet eine Prüfstandseinheit von ca. 2.200 mm Breite, 1.500 mm Länge und ca. 650 mm Höhe. Diese Doppelrolleneinheit 1 kann sowohl auf einem flachen horizontalen Untergrund aufgestellt als auch in handelsüblichen Containern oder auf Ladeflächen von Lastkraftfahrzeugen transportiert werden. Eine derartige Doppelrolleneinheit 1 ist in der Praxis noch mit Abdeckblechen und Auffahrrampen versehen, so daß damit Fahrzeuge mit einachsigem Antrieb geprüft werden können. Dazu ist noch eine Auswertevorrichtung bekannter Ausbildung vorgesehen, die vorzugsweise aus einer programmgesteuerten Rechenanlage besteht, die über Steckverbindungen mit der Doppelrolleneinheit 1 gekoppelt ist.

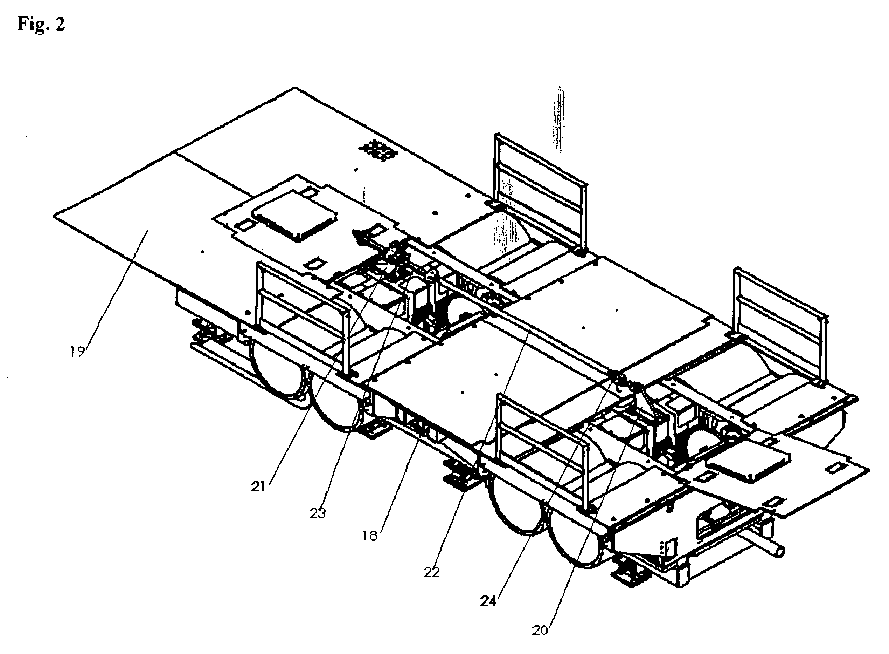

In Fig. 2 der Zeichnung ist ein Abgasprüfstand als spezielle Bauart eines Leistungsprüfstands dargestellt, der insbesondere für Allradfahrzeuge vorgesehen ist. Dieser Abgasprüfstand besteht im Grunde aus zwei Doppelrolleneinheiten 1 nach Fig. 1, die gegeneinander in ihrem Abstand verschiebbar angeordnet sind. Durch eine derartige Längsverstellung werden die unterschiedlichen Achsabstände der zu prüfenden Fahrzeuge eingestellt, so daß alle Antriebsräder symmetrisch zwischen den Rollenpaaren 2 laufen. Dazu sind die beiden Doppelrolleneinheiten 1 auf einem verschiebbaren Unterrahmen 18 als Verschiebevorrichtungen gelagert und mit diesem verbunden. Zwischen den beiden verschieblichen Rahmenteilen ist ein nicht dargestellter Spindelantrieb vorgesehen, durch den der Abstand zwischen den Doppelrolleneinheiten 1 entsprechend den bekannten Fahrzeugachsabständen eingestellt wird.

Auf der Oberseite des Abgasprüfstandes für Allradfahrzeuge ist noch eine Abdeckeinheit vorgesehen, die im Grunde aus verschiedenen Abdeckblechen 19 besteht, die insbesondere im Verstellbereich auch übereinanderschiebbar sind und eine Auf- und Überfahrt der Prüffahrzeuge ermöglichen. Soweit der Prüfstand auf einer Bodenplatte aufgestellt ist, können noch schräge Auffahrrampen vorgesehen werden, durch die nahezu ortsunabhängige Abgasprüfungen durchführbar sind. Als Aufstellflächen sind auch Containerböden oder die Ladeflächen von Lastkraftfahrzeugen möglich, wodurch eine hohe Mobilität erreichbar ist.

Da bei jeder ortsveränderten Aufstellung des Prüfstands schon wegen möglicher Temperatur- und Gravitationsunterschiede eine neue Kalibrierung der Kraftmeßvorrichtung vorgenommen werden muß, ist oberhalb der Abdeckeinheit eine neuartige Kalibriervorrichtung vorgesehen. Dazu ist auf jedem Statorgehäuse der beiden Doppelrolleneinheiten 1 ein Hebelarm als anschraubbarer Lagerbock 21, 20 angebracht, zwischen denen als Verbindungsmittel eine Verbindungsstange 22 befestigt ist. Dabei stützt sich die linke Seite der Befestigungsstange 22 über ein wegverstärkendes Spiralfederpaket 23 auf den linken Lagerbock 21 ab. Zwischen der rechten Seite der Befestigungsstange 22 und des rechten Lagerbocks 20 ist eine geeichte Referenzkraftmeßdose 24 angebracht, die mit einer Anzeigevorrichtung oder einer programmgesteuerten Auswertevorrichtung verbindbar ist.

Zur Kalibrierung wird nun der Abstand zwischen den beiden Doppelrolleneinheiten 1 mittels des Spindelantriebs verändert, so daß in die beiden Kraftaufnehmer der pendelnd gelagerten Belastungsmaschine 3 eine Kraft eingeleitet wird. Die Lagerböcke 20, 21 haben vorzugsweise eine Hebelarmlänge von 381 mm, die vorzugsweise der Hebelarmlänge der Drehmomenthebel 12 entspricht. Über die bekannten Hebelarmlängen kann die Krafteinleitung an den Belastungsmaschinen 3 mit der erfaßten Referenzkraft verglichen werden und bei einer Abweichung werden die Kraftmeßvorrichtungen an den Belastungsmaschinen 3 entsprechend dem Referenzmeßwert kalibriert.

Eine derartige Kalibriereinrichtung ist auf dem Statorgehäuse durch vorgesehene Gewindebohrungen oder Klemmeinrichtungen einfach und schnell befestigbar, so daß diese auch auf einfache Weise nach der Kalibrierung wieder entfernt werden kann. Eine derartig einfache Kalibriervorrichtung kann auch für eine einzelne Doppelrolleneinheit 1 vorgesehen werden. Dazu muß dann lediglich der rechte Lagerbock 20 an einem ortsfesten Geräteteil befestigt werden, von dem aus gleichzeitig die Doppelrolleneinheit 1 beispielsweise über einen verschiebbaren Rahmen längsverstellbar anzuordnen wäre. Dies könnte ebenfalls mittels eines Unterrahmens 18 und eines Spindelantriebs gelöst werden.

## Patentansprüche

1. Fahrzeugprüfstand zur Fahrsimulation mit mindestens einer Doppelrolleneinheit (1), die jeweils über zwei Doppelrollensätze (2), einen Drehzahlaufnehmer und einer pendelnd aufgehängten Wechselstrommaschine (3) verfügt, wobei sich die wechselstrommaschine (3) auf mindestens eine Kraftmessvorrichtung (12) abstützt und wobei alle Laufrollen (8, 9) drehzahlsynchron gekoppelt sind,
**dadurch gekennzeichnet,**
**dass** die Wechselstrommaschine (3) zwischen den zwei ersten axial gegenüberliegenden Laufrollen (8, 9) angeordnet ist,
**dass** der Antrieb der zweiten axial gegenüberliegenden Laufrollen (8, 9) durch die Wechselstronumaschine (3) über einen Zahnriemen (16) drehzahlsynchron erfolgt,
**dass** die axial gegenüberliegenden Laufrollen (8, 9) jeweils an den Enden einer sich auf zwei Wälzlager (11) abstützenden gemeinsamen durchgehenden Antriebswelle (4, 5) angeordnet sind und
**dass** auf der einen Antriebswelle (4) der Rotor der Wechselstrommaschine (3) und auf der anderen Antriebswelle (5) eine Bremse (17) angeordnet ist.

2. Fahrzeugprüfstand nach Anspruch 1, **dadurch gekennzeichnet, dass** die Laufrollen (8,9) der Doppelrollensätze (2) einen Durchmesser von 20 aufweisen.

3. Fahrzeugprüfstand nach einen der vorangehenden Ansprüche, **dadurch gekennzeichnet, dass** die Wechselstrommaschine (3) eine drehzahlgeregelte Asynchronmaschine ist.

4. Fahrzeugprüfstand nach einen der vorangehenden Ansprüche, **dadurch gekennzeichnet, dass** die Doppelrolleneinheit (1) gegenüber einem ortsfesten Geräteteil verschiebbar ausgebildet ist und dass die Wechselstrommaschine (3) über eine Kalibriereinrichtung mit dem ortsfesten Geräteteil verbunden ist.

5. Fahrzeugprüfstand nach einen der vorangehenden Ansprüche 1 bis 3, **dadurch gekennzeichnet, dass** eine zweite Doppelrolleneinheit (1) in Fahrzeuglängsrichtung längsverschieblich auf einer Verschiebevorrichtung (18) angeordnet ist.

6. Fahrzeugprüfstand nach Anspruch 5, **dadurch gekennzeichnet, dass** jede Wechselstrommaschine (3) mit einer Kalibriereinrichtung verbindbar ist, die zwischen einer verschieblich angeordneten Doppelrolleneinheit (1) und einem ortsfesten Geräteteil oder zwischen zwei verschiebbar angeordneten Doppelrolleneinheiten (1) vorgesehen ist.

7. Fahrzeugprüfstand nach Anspruch 4 oder 6, **dadurch gekennzeichnet, dass** die Kalibriereinrichtung aus mindestens zwei beabstandeten Hebelarmen (20, 21) besteht, zwischen denen mindestens ein Verbindungsmittel (22), ein Federpaket (23) und eine Referenzmessvorrichtung (24) angeordnet ist, wobei die Hebelarme (29, 21) fest mit jeweils einer Wechselstrommaschine (3) oder einer wechselstrommaschine (3) und dem ortsfesten Geräteteil verbunden sind.

## Claims

1. Vehicle test stand for driving simulation with at least one double roller unit (1), each unit being provided with two sets of double rollers (2), a speed sensor and a cradle-mounted a.c. motor (3), the a.c. motor (3) being supported on at least one load measuring device (12) and all rollers (8, 9) being coupled in such a way so as to be synchronous in speed,
**characterized in that**
the alternating current motor (3) is arranged between the first two axially opposite rollers (8, 9),
the second two axially opposite rollers (8, 9) are driven speed-synchronously by the a.c. motor (3) via a toothed belt (16),
each of the axially opposite rollers (8, 9) is arranged on one end of a common, continuous drive shaft (4, 5) mounted on two rolling bearings (11) and **in that**
on one drive shaft (4) the rotor of the a.c. motor (3) and on the other drive shaft (5) a brake (17) is arranged.

2. Vehicle test stand according to claim 1, **characterized in that** the rollers (8, 9) of the double roller units (2) have a diameter of 20".

3. Vehicle test stand according to one of the preceding claims, **characterized in that** the alternating current motor (3) consists in a speed-controlled asynchronous machine.

4. Vehicle test stand according to one of the preceding claims, **characterized in that** the double roller unit (1) is designed in such a way so as to be moveable relative to a stationary equipment section and **in that** the a.c. motor (3) is connected with the stationary section via a calibration device.

5. Vehicle test stand according to one of the preceding claims 1 to 3, **characterized in that** a second double roller unit (1) is arranged on a shifting device (18) in such a way that it can be slid lengthwise in the longitudinal direction of the vehicle.

6. Vehicle test stand according to claim 5, **characterized in that** each a.c. motor (3) can be connected with a calibration device which is provided between a slideably arranged double roller unit (1) and a stationary equipment section or between two slideably arranged double roller units (1).

7. Vehicle test stand according to claim 4 or 6, **characterized in that** the calibration device comprises at least two lever arms (20, 21) arranged at a distance, between which at least a linking device (22), a spring assembly (23) and a reference measuring device (24) are arranged, the lever arms (20, 21) being firmly connected with an a.c. motor each or with an a.c. motor (3) and the stationary equipment section.

## Revendications

1. Banc d'essai destiné à la simulation de roulage constitué de non moins d'une unité à double galet (1), disposant respectivement de deux jeux de galets doubles (2), d'un compteur de régime et d'un agrégat à courant alternatif (3) monté en suspension pendulaire, où l'agrégat à courant alternatif (3) se trouve en appui sur au moins un capteur dynamométrique (12) et où tous les galets (8, 9) sont couplés en régime synchrone,
**caractérisé en ce que** l'agrégat à courant alternatif (3) est disposé en opposition axiale entre les deux premiers galets (8, 9) et que l'entraînement de la seconde paire de galets (8,9) disposés axialement est réalisé par l'agrégat à courant alternatif (3) en synchronisation de régime, au moyen d'une courroie dentée (16), que les galets (8, 9) axialement opposés sont disposés respectivement aux extrémités d'un arbre d'entraînement (4) traversant commun, en appui sur deux paliers (11), et que l'un des arbres d'entraînement (4) est équipé du rotor de l'agrégat à courant alternatif (3), l'autre arbre d'entraînement étant équipé d'un frein (5).

2. Banc d'essai de véhicule selon la revendication 1, **caractérisé en ce que** les galets (8, 9) des jeux de doubles galets (2) présentent un diamètre de 20".

3. Banc d'essai de véhicule selon l'une des revendications précédentes, **caractérisé en ce que** l'agrégat à courant alternatif (3) est un agrégat asynchrone à régulation de régime.

4. Banc d'essai de véhicule selon l'une de revendications précédentes, **caractérisé en ce que** l'unité de doubles galets (1) présente la capacité d'opérer un mouvement translatif par rapport à la partie fixe de l'appareil, l'agrégat à courant alternatif étant reliée à cette partie fixe par un dispositif de calibrage.

5. Banc d'essai de véhicule selon l'une de revendications 1 à 3 précédentes, **caractérisé en ce que** un second jeu de galets doubles (1) est disposé selon le l'axe longitudinal du véhicule, avec une possibilité de translation dans le sens longitudinal (19).

6. Banc d'essai de véhicule selon la revendication 5, **caractérisé en ce que** chaque agrégat à courant alternatif (3) présente la possibilité d'une liaison avec dispositif de calibrage, prévu soit entre un jeu de galets doubles (1) à mobilité translative et la partie fixe de l'appareil, soit entre deux jeux de galets doubles (1) à mobilité translative.

7. Banc d'essai de véhicule selon la revendication 4 ou 6, **caractérisé en ce que** le dispositif de calibrage est composé d'au moins deux bras de levier (20, 21) distants l'un de l'autre, entre lesquels est disposé au moins un moyen de liaison (22), un paquet de ressorts (23) et un dispositif de mesure de référence (24), alors que les bras de leviers (29, 21) sont en liaison fixe soit avec un agrégat à courant alternatif (3) soit en liaison fixe avec un agrégat à courant alternatif (3) et la partie fixe de l'appareil.
